# EUROPÄISCHE PATENTSCHRIFT

(11) **EP 3 111 748 B1**
(45) Veröffentlichungstag und Bekanntmachung des Hinweises auf die Patenterteilung: **26.06.2019**
(21) Anmeldenummer: 16163616.2
(22) Anmeldetag: 04.04.2016
(51) Int. Cl.: A01F 15/18, B65G 15/32, B65G 15/34, B65G 15/36

(54) **IN LÄNGSRICHTUNG ENDLOS GESCHLOSSENES BAND, INSBESONDERE RUNDBALLENPRESSBAND**
LONGITUDINAL ENDLESS CLOSED BELT, IN PARTICULAR BELT FOR ROTOBALER
BANDE FERMEE SANS FIN DANS LA DIRECTION LONGITUDINALE, EN PARTICULIER BANDE DE PRESSE A BALLES RONDES

(30) Priorität: 03.07.2015 DE 102015212480
(43) Veröffentlichungstag der Anmeldung: 04.01.2017
(73) Patentinhaber: ContiTech Transportbandsysteme GmbH, 30165 Hannover (DE)
(72) Erfinder: Behrens, Carsten, 37434 Bilshausen (DE); Stange, Lysander, 37154 Northeim (DE)
(74) Vertreter: Finger, Karsten

(56) Entgegenhaltungen:
- DE-A1- 2 832 054
- FR-A- 1 318 725
- FR-A- 1 575 376
- US-A- 5 326 411
- US-A1- 2010 300 849

## Beschreibung

Die Erfindung betrifft ein in Längsrichtung endlos geschlossenes Band, insbesondere ein Rundballenpressband, gemäß dem Oberbegriff des Anspruchs 1 sowie ein Verfahren zur Herstellung eines derartigen endlos geschlossenen Bands gemäß Anspruch 7.

In vielen technischen Anwendungen werden seit langem endlos geschlossene Bänder eingesetzt. Dies können z.B. Antriebsriemen, Förderbänder oder Rundballenpressbänder sein. Diese werden üblicherweise dadurch hergestellt, dass eine Gewebekarkasse als Kernbereich aus einer Gewebelage oder mehreren Gewebelagen konfektioniert wird. Dieser Kernbereich wird von innen mit einer elastomeren Laufseite und von außen mit einer elastomeren Tragseite (z.B. Deckplattengummi) versehen. Diese Anordnung kann im Falle der Vulkanisation von Gummiprodukten in einer Presse frei abgeheizt werden. Das (vulkanisierte) Band kann dann auf die gewünschte Breite zugeschnitten werden.

Nachteilig ist hierbei, dass durch das seitliche Zuschneiden das Gewebe des Kernbereichs zumindest teilweise freigelegt und durch das Schneiden beschädigt werden kann. Das freiliegende Gewebe kann daher Feuchtigkeit aufnehmen, wodurch es zu einer ungewollten Aufquellung der Gewebekanten kommen kann, die zu einer Verformung des Bandes führen kann. Dies kann zu einem verschlechterten Laufverhalten in Längsrichtung führen. Ferner können an den Schnittkanten Gewebefäden der Gewebekarkasse seitlich austreten. Diese Fransenbildung kann zum einen einen optischen Mangel darstellen. Zum anderen können sich in diese Fransen an anderen Körpern verwickeln, hierdurch aus der Kante der Gewebekarkasse herausgerissen werden und so zu Beschädigungen der Deckplatten führen.

Aus der DE 30 16 674 A1 ist ein Pressband für Ballenriemen bekannt, welches als Kern ein in Längsrichtung verlaufendes Verstärkungsgewebe aufweist. Oberhalb und unterhalb des Verstärkungsgewebes sind Deckplatten angeordnet. An den glattgeschnittenen Seitenkanten des Pressbandes sind beidseitig Kantenstreifen angebracht, um die Seitenkanten abzudecken und gegen Beschädigungen zu schützen.

Nachteilig ist hierbei, dass die Verbindung zwischen den Kantenstreifen und den glattgeschnittenen Seitenkanten des bereits zuvor vulkanisierten Pressbandes z.B. durch Klebemittel hergestellt werden muss. Diese Art der stoffschlüssigen Verbindung weist nur eine eingeschränkte Haltbarkeit auf, so dass die Kantenstreifen bei der Benutzung abreißen können. Hierdurch verlieren sie zum einen ihre schützende Wirkung. Zum anderen verändert sich hierdurch die Breite des Pressbandes in Querrichtung. Auch verlaufen die Klebekanten laufseitig und tragseitig sichtbar, so dass sich uneinheitliche Oberflächen der Laufseite und Tragseite bilden. Dies kann zu einem veränderten Laufverhalten des Pressbandes führen. Außerdem können die Klebekanten auf diese Weise äußeren Einflüssen und direkten Belastungen ausgesetzt sein, die die Haltbarkeit der Klebeverbindung negativ beeinflussen kann.

Die US 5,326,411 A beschreibt ein in Längsrichtung endlos geschlossenes Rundballenpressband mit einem Bandkern und einem äußeren Schutz, welcher aus einer oberen Schicht und aus einer unteren Schicht sowie aus zwei seitlichen Kappen besteht. Die Kappen bestehen aus einem härteren Elastomer als die obere und untere Schicht sowie als der Bandkern. Hierdurch weisen die beiden seitlichen Kanten des Rundballenpressbands ein größeres Elastizitätsmodul als der Bandkern auf. Die Kappen überlappen sich dabei jeweils beidseitig von oben und von unten mit dem Bandkern, um mit diesem sicher verbunden zu sein. Ferner erstrecken sich die beiden Kappen seitlich keilförmig größer werdend von dem Bandkern weg, so dass sie jeweils in der Höhe vollständig die seitlichen äußeren Kanten des Rundballenpressbands bilden. Hierdurch werden die Oberseite und die Unterseite des Rundballenpressbands in der Breite mittig durch die obere Schicht bzw. durch die untere Schicht und jeweils am seitlichen Rand durch die jeweilige Kappe gebildet.

Die FR 1 318 725 A beschreibt ein Herstellungsverfahren für einen Kernbereich, welcher zu den Seiten sowie von oben und unten von einem Material umschlossen wird. Alternativ können mehrere Kernbereiche seitlich nebeneinander angeordnet und gemeinsam von dem Material umschlossen werden, welches auch zwischen den Kernbereichen angeordnet ist.

Eine Aufgabe der vorliegenden Erfindung ist es, ein in Längsrichtung endlos geschlossenes Band, insbesondere ein Rundballenpressband, der eingangs beschriebenen Art bereit zu stellen, bei dem der Kernbereich besser als bisher bekannt geschützt werden kann.

Die Aufgabe wird erfindungsgemäß durch ein in Längsrichtung endlos geschlossenes Band, insbesondere ein Rundballenpressband, mit den Merkmalen gemäß Anspruch 1 sowie ein Verfahren zu dessen Herstellung gemäß Anspruch 7 gelöst. Vorteilhafte Weiterbildungen sind in den Unteransprüchen beschrieben.

Somit betrifft die vorliegende Erfindung ein in Längsrichtung endlos geschlossenes Band, insbesondere ein Rundballenpressband, mit einem innenliegenden Bereich, einem außenliegenden Bereich, und einem zwischen dem innenliegenden Bereich und dem außenliegenden Bereich angeordneten Kernbereich. Hierbei ist "Innen" und "Außen" in Richtung der Dicke bzw. Höhe des endlos geschlossenen Bandes zu verstehen, d.h. sozusagen in radialer Richtung. Der innenliegende Bereich stellt bei einem Rundballenpressband die Laufseite und der außenliegende Bereich die Tragseite dar. Das endlos geschlossene Band weist ferner wenigstens einen quer zur Längsrichtung, d.h. in Querrichtung, angeordneten Randbereich auf. Dieser Randbereich ist in der Breite seitlich zum Kernbereich angeordnet.

Das erfindungsgemäße endlos geschlossene Band ist dadurch gekennzeichnet, dass der Randbereich vollständig zwischen dem innenliegenden Bereich und dem außenliegenden Bereich angeordnet ist. Mit anderen Worten erstrecken sich der innenliegende Bereich und der außenliegende Bereich in Querrichtung über den Randbereich hinweg, so dass sie den Randbereich genauso wie den Kernbereich zwischen sich einschließen. Hierbei schließen die innenliegenden und außenliegenden Bereiche den Randbereich in Richtung der Querrichtung vollständig ein. Auch können der innenliegende und der außenliegende Bereich den Randbereich jeweils unterschiedlich weit in Querrichtung einschließen.

Dabei liegt der vorliegenden Erfindung die Erkenntnis zugrunde, dass der Kernbereich durch den Randbereich seitlich geschützt und eine bessere Anbindung des Randbereichs zum übrigen Band geschaffen werden kann, indem der Randbereich zumindest teilweise von beiden Seiten (von oben und von unten) von den innenliegenden und außenliegenden Bereichen umfasst wird. Hierdurch wird die bessere Verbindung zum einen über eine größere Kontaktfläche erzeugt. Zum anderen umschließt diese Kontaktfläche den Randbereich von drei Seiten, was ebenfalls die Stabilität dieser Verbindung erhöhen kann. Durch diese verbesserte Verbindung zwischen Randbereich und übrigem Band kann der Randbereich seine schützende Wirkung besser und länger ausüben. Dabei ist diese Erfindung auf alle Arten von endlos geschlossenen Bändern, Riemen, Gurten wie z.B. Antriebsriemen, Fördergurte, Raunballenpressbänder etc. anwendbar.

Gemäß einem weiteren Aspekt der vorliegenden Erfindung ist der Randbereich vollständig zwischen dem innenliegenden Bereich und dem außenliegenden Bereich angeordnet. Mit anderen Worten erstrecken sich der innenliegende Bereich und der außenliegende Bereich sowie der Randbereich in Querrichtung auf gleicher Breite und schließen somit seitlich miteinander bündig ab. Hierdurch wird nach oben und nach unten jeweils eine glatte und geschlossene Oberfläche erzeugt, die nicht nur einheitlich aussieht, sondern auch ein einheitliches Verhalten aufweisen kann, beispielsweise hinsichtlich der Laufeigenschaften. Auch wird hierdurch die Verbindung zwischen Randbereich und Kernbereich durch die darunter bzw. darüber angeordneten innen- bzw. außenliegenden Bereiche geschützt. Ferner kann die Wirkung zwischen den innenliegenden und außenliegenden Bereichen und dem Randbereich auf diese Art und Weise maximiert werden, indem die Kontaktfläche zwischen diesen Bereichen maximiert wird.

Gemäß einem weiteren Aspekt der vorliegenden Erfindung weist das endlos geschlossene Band zwei einander quer zur Längsrichtung gegenüberliegende Randbereiche auf. Auf diese Weise können die zuvor beschriebenen Vorteile der vorliegenden Erfindung an beiden seitlichen Kanten des endlos geschlossenen Bandes genutzt werden. Hierdurch kann das endlos geschlossene Band auch symmetrisch aufgebaut werden.

Erfindungsgemäß ist der Kernbereich endlos gewickelt. Hierdurch kann ein endlos geschlossenes Band ohne Unterbrechung in Längsrichtung hergestellt werden, so dass eine Verbindungsstelle als Schwachstelle vermieden werden kann. Auch kann eine gleichmäßige Übertragung von Zugkräften in Längsrichtung ermöglicht werden.

Gemäß einem weiteren Aspekt der vorliegenden Erfindung weist der Kernbereich ein Verstärkungsgewebe auf. Dies kann die Übertragung von Zugkräften in Längsrichtung ermöglichen bzw. verbessern. Das Verstärkungsgewebe kann einlagig oder mehrlagig ausgebildet sein.

Gemäß einem weiteren Aspekt der vorliegenden Erfindung weisen der innenliegende Bereich und bzw. oder der außenliegende Bereich und bzw. oder ein Randbereich und bzw. oder beide Randbereiche ein elastomeres Material auf, vorzugsweise bestehen aus einem elastomeren Material. Auf diese Weise können die elastischen Eigenschaften des Elastomermaterials bei dem endlos geschlossenen Band genutzt werden.

Die vorliegende Erfindung betrifft auch ein Verfahren zur Herstellung eines in Längsrichtung endlos geschlossenen Bands wie zuvor beschrieben mit den Schritten:
- Herstellen eines endlos geschlossenen Kernbereichs durch Wickeln,
- Anordnen eines innenliegenden Bereichs von innen an den Kernbereich, wobei der innenliegende Bereich quer zur Längsrichtung über den Kernbereich hinausragt,
- Anordnen wenigstens eines Randbereichs seitlich quer zur Längsrichtung neben dem Kernbereich, und
- Anordnen eines außenliegenden Bereichs von außen auf den Kernbereich, wobei der außenliegende Bereich quer zur Längsrichtung über den Kernbereich hinausragt, so dass der Randbereich vollständig zwischen dem innenliegenden Bereich und dem außenliegenden Bereich angeordnet ist.

Mittels dieses Verfahrens kann ein erfindungsgemäßes endlos geschlossenes Band einfach und effizient hergestellt werden. Insbesondere ermöglicht der Aufbau des Bandes von innen nach außen eine gute Zugänglichkeit der Zwischenprodukte für die einzelnen Verfahrensschritte.

Gemäß einem Aspekt der Erfindung ist der Randbereich vollständig zwischen dem innenliegenden Bereich und dem außenliegenden Bereich angeordnet. Die Vorteile dieser Ausgestaltung wurden bereits zuvor beschrieben und sollen daher nicht wiederholt werden. Gemäß einem weiteren Aspekt der vorliegenden Erfindung weist das Verfahren ferner den zusätzlichen Schritt auf:
- Vulkanisieren des Bandes.

Hierdurch kann die zuvor beschriebene Anordnung der einzelnen Elemente des erfindungsgemäßen endlos geschlossenen Bandes gemeinsam vulkanisiert werden, so dass zwischen allen Elementen eine stoffschlüssige Verbindung hergestellt werden kann.

Gemäß einem weiteren Aspekt der vorliegenden Erfindung weist das Verfahren ferner den zusätzlichen Schritt auf:
- Trennen des Randbereichs und bzw. oder des innenliegenden Bereichs und bzw. oder des außenliegenden Bereichs in Richtung der Dicke des Bandes, so dass quer zur Längsrichtung der Randbereich mit dem innenliegenden Bereich und bzw. oder mit dem außenliegenden Bereich bündig abschließt.

Auf diese Weise kann das vulkanisierte endlos geschlossene Band auf eine derartige Breite zugeschnitten werden, dass die innenliegenden und außenliegenden Bereiche den Kernbereich und den Randbereich beidseitig sicher umschließen. Ferner kann das endlos geschlossene Band hierdurch auf die gewünschte Breite zugeschnitten werden. Hierdurch kann auch eine glatte und gerade seitliche Kante des endlos geschlossenen Bandes erzeugt werden. Dies kann für den Geradelauf des endlos geschlossenen Bandes vorteilhaft sein.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen endlos geschlossenen Bandes in einem ersten Herstellungsschritt;
- Fig. 2: eine perspektivische schematische Darstellung eines erfindungsgemäßen endlos geschlossenen Bandes in einem zweiten Herstellungsschritt;
- Fig. 3: eine perspektivische schematische Darstellung eines erfindungsgemäßen endlos geschlossenen Bandes in einem dritten Herstellungsschritt;
- Fig. 4: eine perspektivische schematische Darstellung eines erfindungsgemäßen endlos geschlossenen Bandes in einem vierten Herstellungsschritt;
- Fig. 5: eine perspektivische schematische Darstellung eines erfindungsgemäßen endlos geschlossenen Bandes in einem fünften Herstellungsschritt; und
- Fig. 6: eine perspektivische schematische Darstellung eines erfindungsgemäßen endlos geschlossenen Bandes in einem sechsten Herstellungsschritt.

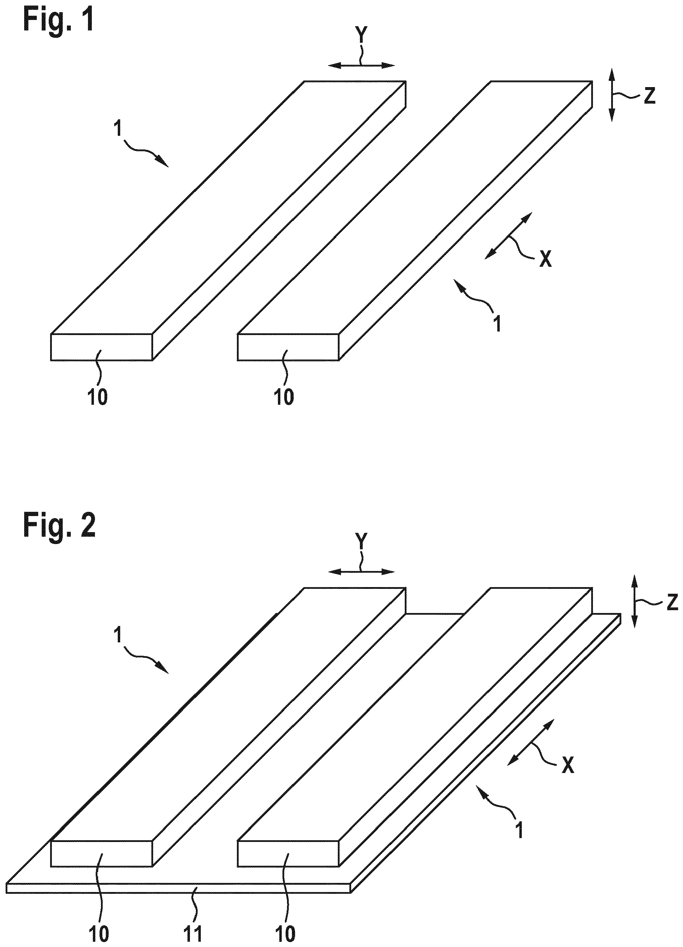

Die Fig. 1 bis 6 zeigen perspektivische schematische Darstellungen eines erfindungsgemäßen endlos geschlossenen Bandes 1 in einem ersten bis sechsten Herstellungs schritt.

Das endlos geschlossene Band 1 ist ein Rundballenpressband 1, welches sich im Wesentlichen in Längsrichtung X erstreckt und in Längsrichtung X endlos geschlossen ist (nicht dargestellt). In seitlicher Richtung Y bzw. Querrichtung Y weist das Rundballenpressband 1 eine gewisse Breite auf. In der Höhe Z bzw. Dicke Z ist das Rundballenpressband 1 vergleichsweise flach ausgebildet. Die Längsrichtung X, die Querrichtung Y und die Höhe Z sind jeweils senkrecht zueinander angeordnet.

Das Rundballenpressband 1 weist einen Kernbereich 10 in Form eines Verstärkungsgewebes 10 auf. Das Verstärkungsgewebe 10 ist endlos geschlossen gewickelt auf einer Konfektionstrommel angeordnet. Gleichzeitig wird das Verstärkungsgewebe 10 bereits auf seine endgültige Breite geschnitten. Dies kann sowohl durch einen reinen Breitenbeschnitt eines Monopressriemens erfolgen als auch durch mehrfachen Breitenschnitt der Karkasse erst auf der Konfektionsanlage vor der Vulkanisation (Konfektionsbeschnitt). Um auf einer Konfektionsanlage mehrere, hier zwei, Rundballenpressbänder 1 gleichzeitig herstellen zu können, können mehrere endlos geschlossene Verstärkungsgewebe 10 in Querrichtung Y nebeneinander angeordnet werden (vgl. Fig. 1).

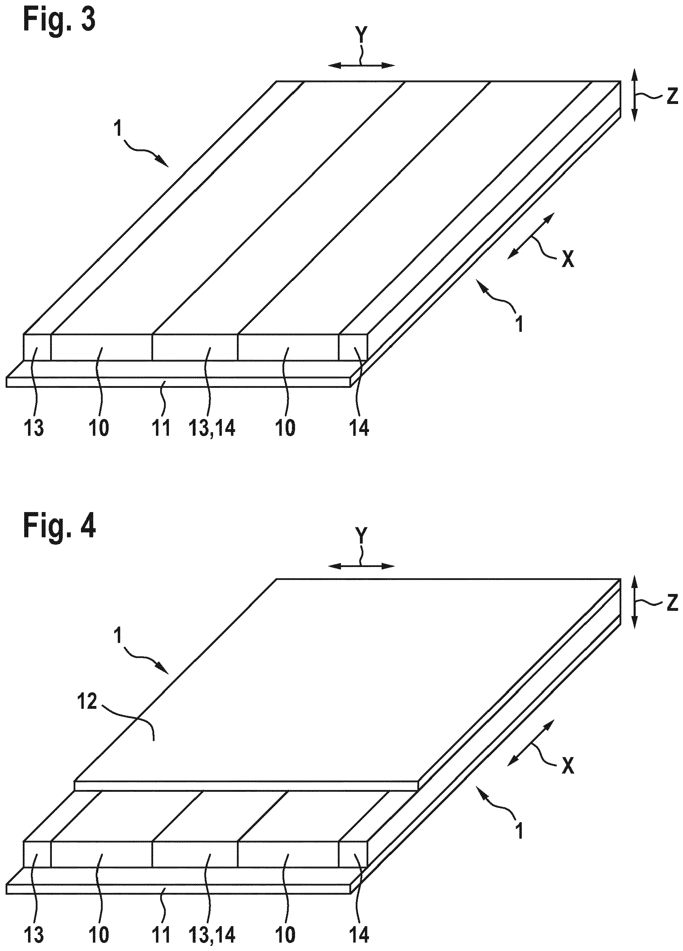

Diese Verstärkungsgewebe 10 werden in einem zweiten Verfahrensschritt von unten, d.h. von innen, mit einem innenliegenden bzw. laufseitigen Bereich aus elastomerem Material unterfüttert (vgl. Fig. 2). In einem dritten Verfahrensschritt wird dann weiteres elastomeres Material vorzugsweise in Form von Materialstreifen in Querrichtung Y seitlich der beiden Verstärkungsgewebe 10 auf die obere, außenliegende Seite des laufseitigen Bereichs 11 in Höhe der Verstärkungsgewebe 10 aufgetragen (vgl. Fig. 3). Dieses elastomere Material bildet seitlich der Verstärkungsgewebe 10 erste und zweite Randbereiche 13, 14 aus.

In einem vierten Verfahrensschritt wird dann ein außenliegender bzw. tragseitiger Bereich 12 von oben auf die Verstärkungsgewebe 10 bzw. Randbereiche 13, 14 aufgebracht, so dass diese über die gesamte Breite in Querrichtung Y umfasst werden (vgl. Fig. 4). Diese Anordnung wird dann vulkanisiert.

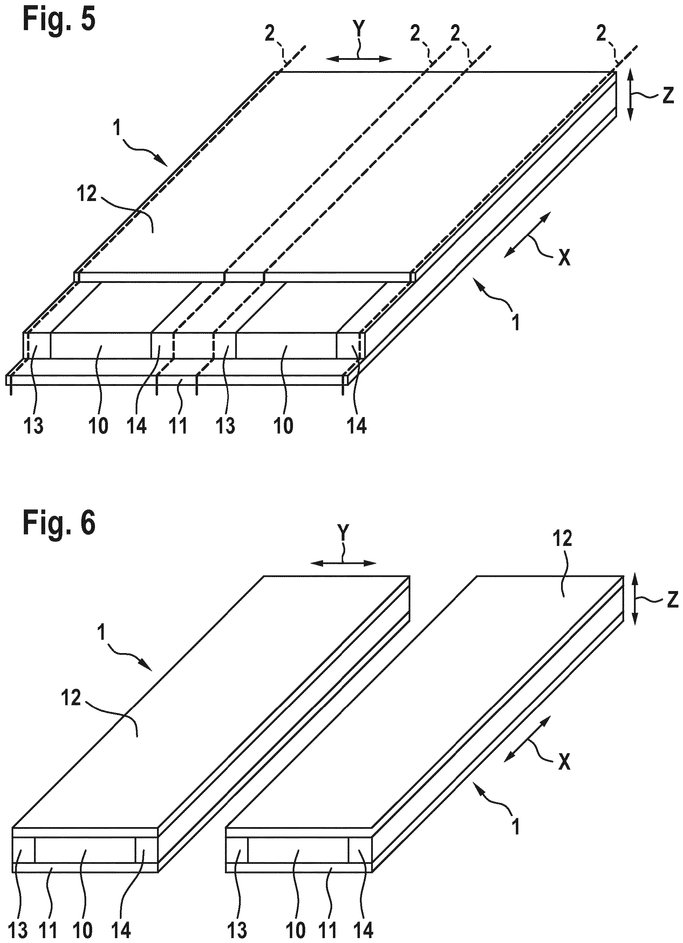

In einem fünften Verfahrensschritt können die beiden Verstärkungsgewebe 10 voneinander getrennt werden, indem in Längsrichtung X entlang der Schnittlinien 2 geschnitten wird (vgl. Fig. 5). Hierdurch werden seitlich in Querrichtung Y gerade Außenkanten der Rundballenpressbänder 1 geschaffen (vgl. Fig. 6). Um beim Schneiden die beiden Verstärkungsgewebe 10 nicht zu beschädigen, können diese mittels Ultraschall detektiert und die Schnittlinien 2 auf der äußeren Oberseite des tragseitigen Bereichs 12 angezeichnet werden.

Auf diese Weise können erfindungsgemäß die Laufeigenschaften eines endlos gewickelten Bandes 1 als Rundballenpressband 1 genutzt werden und zugleich können dessen seitliche Kanten durch die beiden elastomeren Randbereiche 13, 14 geschützt werden. Auch kann vermieden werden, dass das Verstärkungsgewebe 10 durch das Zuschneiden beschädigt werden sowie seitlich in Querrichtung Y aus dem Rundballenpressband 1 herausragen kann. Dies kann auch das optische Erscheinungsbild des Rundballenpressbandes 1 verbessern. Die beiden elastomeren Randbereiche 13, 14 können auch als Verschleißschutz der seitlichen Kanten des Rundballenpressbandes 1 wirken.

### Bezugszeichenliste

### (Teil der Beschreibung)

- X: Längsrichtung
- Y: Querrichtung bzw. seitliche Richtung
- Z: Dicke bzw. Höhe

- 1: endlos geschlossenes Band bzw. Rundballenpressband
- 10: Kernbereich bzw. Verstärkungsgewebe
- 11: innenliegender bzw. laufseitiger Bereich
- 12: außenliegender bzw. tragseitiger Bereich
- 13: erster Randbereich
- 14: zweiter Randbereich

- 2: Schnittlinie

## Patentansprüche

1. In Längsrichtung (X) endlos geschlossenes Band (1), mit
einem innenliegenden Bereich (11),
einem außenliegenden Bereich (12),
einem zwischen dem innenliegenden Bereich (11) und dem außenliegenden Bereich (12) angeordneten Kernbereich (10), und
wenigstens einem quer zur Längsrichtung (X) angeordneten Randbereich (13; 14),
wobei der Randbereich (13; 14) vollständig zwischen dem innenliegenden Bereich (11) und dem außenliegenden Bereich (12) angeordnet ist,
**dadurch gekennzeichnet, dass**
der Kernbereich (10) endlos gewickelt ist.

2. In Längsrichtung (X) endlos geschlossenes Band (1) gemäß Anspruch 1,
wobei das endlos geschlossene Band (1) ein Rundballenpressband (1) ist.

3. In Längsrichtung (X) endlos geschlossenes Band (1) gemäß Anspruch 1 und 2,
wobei das endlos geschlossene Band (1) zwei einander quer zur Längsrichtung (X) gegenüberliegende Randbereiche (13, 14) aufweist.

4. In Längsrichtung (X) endlos geschlossenes Band (1) gemäß einem der vorherigen Ansprüche,
wobei der Kernbereich (10) ein Verstärkungsgewebe (10) aufweist.

5. In Längsrichtung (X) endlos geschlossenes Band (1) gemäß einem der vorherigen Ansprüche,
wobei der innenliegende Bereich (11) und/oder der außenliegende Bereich (12) und/oder ein Randbereich (13; 14) und/oder beide Randbereiche (13, 14) ein elastomeres Material aufweisen.

6. In Längsrichtung (X) endlos geschlossenes Band (1) gemäß einem der vorherigen Ansprüche,
wobei der innenliegende Bereich (11) und/oder der außenliegende Bereich (12) und/oder ein Randbereich (13; 14) und/oder beide Randbereiche (13, 14) aus einem elastomeren Material bestehen.

7. Verfahren zur Herstellung eines in Längsrichtung (X) endlos geschlossenen Bands (1) gemäß einem der vorherigen Ansprüche, mit den Schritten:
Herstellen eines endlos geschlossenen Kernbereichs (10) durch Wickeln,
Anordnen eines innenliegenden Bereichs (11) von innen an den Kernbereich (10),
wobei der innenliegende Bereich (11) quer zur Längsrichtung (X) über den Kernbereich (10) hinausragt,
Anordnen wenigstens eines Randbereichs (13; 14) seitlich quer zur Längsrichtung (X) neben dem Kernbereich (10), und
Anordnen eines außenliegenden Bereichs (12) von außen auf den Kernbereich (10),
wobei der außenliegende Bereich (11) quer zur Längsrichtung (X) über den Kernbereich (10) hinausragt,
so dass der Randbereich (13; 14) vollständig zwischen dem innenliegenden Bereich (11) und dem außenliegenden Bereich (12) angeordnet ist.

8. Verfahren gemäß Anspruch 7, ferner mit dem zusätzlichen Schritt:
Vulkanisieren des Bandes (1).

9. Verfahren gemäß Anspruch 7 oder 8, ferner mit dem zusätzlichen Schritt:
Trennen des Randbereichs (13; 14) und/oder des innenliegenden Bereichs (10) und/oder des außenliegenden Bereichs (11) in Richtung der Dicke (Z) des Bandes (1), so dass quer zur Längsrichtung (X) der Randbereich (13; 14) mit dem innenliegenden Bereich (10) und/oder mit dem außenliegenden Bereich (11) bündig abschließt.

## Claims

1. Belt (1) that is continuously closed in the longitudinal direction (X), having
an internal region (11),
an external region (12),
a core region (10) arranged between the internal region (11) and the external region (12), and
at least one peripheral region (13; 14) arranged transversely to the longitudinal direction (X),
the peripheral region (13; 14) being arranged entirely between the internal region (11) and the external region (12),
**characterized in that**
the core region (10) is continuously wound.

2. Belt (1) that is continuously closed in the longitudinal direction (X) according to Claim 1, the continuously closed belt (1) being a round baler belt (1).

3. Belt (1) that is continuously closed in the longitudinal direction (X) according to Claims 1 and 2,
the continuously closed belt (1) having two peripheral regions (13, 14) located opposite one another transversely to the longitudinal direction (X).

4. Belt (1) that is continuously closed in the longitudinal direction (X) according to one of the preceding claims,
the core region (10) having a reinforcing fabric (10).

5. Belt (1) that is continuously closed in the longitudinal direction (X) according to one of the preceding claims,
the internal region (11) and/or the external region (12) and/or a peripheral region (13; 14) and/or both peripheral regions (13, 14) exhibiting an elastomeric material.

6. Belt (1) that is continuously closed in the longitudinal direction (X) according to one of the preceding claims,
the internal region (11) and/or the external region (12) and/or a peripheral region (13; 14) and/or both peripheral regions (13, 14) consisting of an elastomeric material.

7. Method for producing a belt (1) that is continuously closed in the longitudinal direction (X) according to one of the preceding claims, having the steps of:
producing a continuously closed core region (10) by winding,
arranging an internal region (11) against the core region (10) from the inside, the internal region (11) protruding beyond the core region (10) transversely to the longitudinal direction (X),
arranging at least one peripheral region (13; 14) laterally next to the core region (10) transversely to the longitudinal direction (X), and
arranging an external region (12) on the core region (10) from the outside, the external region (11) protruding beyond the core region (10) transversely to the longitudinal direction (X),
such that the peripheral region (13; 14) is arranged entirely between the internal region (11) and the external region (12).

8. Method according to Claim 7, also having the additional step of:
vulcanizing the belt (1).

9. Method according to Claim 7 or 8, also having the additional step of:
Separating the peripheral region (13; 14) and/or the internal region (10) and/or the external region (11) in the direction of the thickness (Z) of the belt (1), such that the peripheral region (13; 14) terminates flush with the internal region (10) and/or with the external region (11) transversely to the longitudinal direction (X).

## Revendications

1. Bande fermée sans fin (1) dans la direction longitudinale (X), avec
une région située à l'intérieur (11),
une région située à l'extérieur (12),
une région de coeur (10) disposée entre la région située à l'intérieur (11) et la région située à l'extérieur (12), et
au moins une région de bord (13; 14) disposée transversalement à la direction longitudinale (X),
dans laquelle la région de bord (13; 14) est disposée entièrement entre la région située à l'intérieur (11) et la région située à l'extérieur (12),
**caractérisée en ce que** la région de coeur (10) est enroulée sans fin.

2. Bande fermée sans fin (1) dans la direction longitudinale (X) selon la revendication 1, dans laquelle la bande fermée sans fin (1) est une bande de presse à balles rondes.

3. Bande fermée sans fin (1) dans la direction longitudinale (X) selon une revendication 1 ou 2, dans laquelle la bande fermée sans fin (1) présente deux régions de bord (13, 14) disposées l'une en face de l'autre transversalement à la direction longitudinale (X).

4. Bande fermée sans fin (1) dans la direction longitudinale (X) selon l'une quelconque des revendications précédentes, dans laquelle la région de coeur (10) présente un tissu de renforcement (10).

5. Bande fermée sans fin (1) dans la direction longitudinale (X) selon l'une quelconque des revendications précédentes, dans laquelle la région située à l'intérieur (11) et/ou la région située à l'extérieur (12) et/ou une région de bord (13; 14) et/ou les deux régions de bord (13, 14) présentent un matériau élastomère.

6. Bande fermée sans fin (1) dans la direction longitudinale (X) selon l'une quelconque des revendications précédentes, dans laquelle la région située à l'intérieur (11) et/ou la région située à l'extérieur (12) et/ou une région de bord (13; 14) et/ou les deux régions de bord (13, 14) sont constituées d'un matériau élastomère.

7. Procédé de fabrication d'une bande fermée sans fin (1) dans la direction longitudinale (X) selon l'une quelconque des revendications précédentes, comprenant les étapes suivantes:
fabriquer une région de coeur fermée sans fin (10) par enroulement,
disposer une région située à l'intérieur (11) par l'intérieur sur la région de coeur (10), dans lequel la région située à l'intérieur (11) dépasse au-delà de la région de coeur (10) transversalement à la direction longitudinale (X),
disposer au moins une région de bord (13; 14) à côté de la région de coeur (10) latéralement transversalement à la direction longitudinale (X), et
disposer une région située à l'extérieur (12) par l'extérieur sur la région de coeur (10), dans lequel la région située à l'extérieur (11) dépasse au-delà de la région de coeur (10) transversalement à la direction longitudinale (X),
de telle manière que la région de bord (13; 14) soit disposée entièrement entre la région située à l'intérieur (11) et la région située à l'extérieur (12).

8. Procédé selon la revendication 7, comprenant en outre l'étape supplémentaire: vulcaniser la bande (1).

9. Procédé selon une revendication 7 ou 8, comprenant en outre l'étape supplémentaire:
trancher la région de bord (13; 14) et/ou la région située à l'intérieur (10) et/ou la région située à l'extérieur (11) dans la direction de l'épaisseur (Z) de la bande (1), de telle manière que la région de bord (13; 14) se termine à fleur de la région située à l'intérieur (10) et/ou de la région située à l'extérieur (11) transversalement à la direction longitudinale (X).
